# EUROPÄISCHE PATENTSCHRIFT

(11) **EP 2 730 336 B1**
(45) Veröffentlichungstag und Bekanntmachung des Hinweises auf die Patenterteilung: **06.07.2016**
(21) Anmeldenummer: 13191072.1
(22) Anmeldetag: 31.10.2013
(51) Int. Cl.: B01L 3/00, F16K 99/00

(54) **VENTILANORDNUNG IN EINEM MIKROFLUIDIKSYSTEM**
VALVE ASSEMBLY IN A MICROFLUIDIC SYSTEM
AGENCEMENT DE SOUPAPE DANS UN SYSTÈME MICROFLUIDIQUE

(30) Priorität: 09.11.2012 DE 102012220407
(43) Veröffentlichungstag der Anmeldung: 14.05.2014
(73) Patentinhaber: ROBERT BOSCH GMBH, 70442 Stuttgart (DE)
(72) Erfinder: Brettschneider, Thomas, 71229 Leonberg (DE); Laermer, Franz, 71263 Weil Der Stadt (DE); Dorrer, Christian, 70193 Stuttgart (DE)

(56) Entgegenhaltungen:
- WO-A1-02/088551
- WO-A1-2010/106426
- DE-U1-202012 001 202
- J. RUPP ET AL.: "Platform for lab-on-a chip systems based on integrated active valves made in polymers suitable for mass production", MIKROSYSTEMTECHNIK KONGRESS, 2009, XP002722834,

## Beschreibung

Die vorliegende Erfindung betrifft eine Ventilanordnung in einem Mikrofluidiksystem, insbesondere für eine Verwendung in einem Lab-On-a-Chip (LOC)-System.

### Stand der Technik

Aus dem Stand der Technik sind LOC-Systeme, welche oft auch als µTAS (micrototal-analysis-systems) bezeichnet werden, bekannt, welche generell dazu dienen, Proben, wie z.B. Proben von Patienten, wie Blut, Urin, Sputum, oder sonstige Körperflüssigkeiten, vollständig und automatisch zu analysieren, wobei die geringe Größe dieser Systeme sehr bedeutsam ist, weshalb sie insbesondere für mobile Anwendungen eingesetzt werden, wo schnell eine vollständige Analyse durchgeführt werden muss, z.B. bei der medizinischen Erstversorgung.

Bei der praktischen Handhabung dieser Systeme kann insbesondere die kontrollierte Handhabung bzw. Lagerung von flüssigen Reagenzien innerhalb dieser Systeme kritisch sein, beispielsweise hinsichtlich der Abdichtung einer Probe gegenüber der Umgebung, zum Beispiel für eine kontrollierte Weiterleitung in weitere Reagenzräume in dem LOC-System.

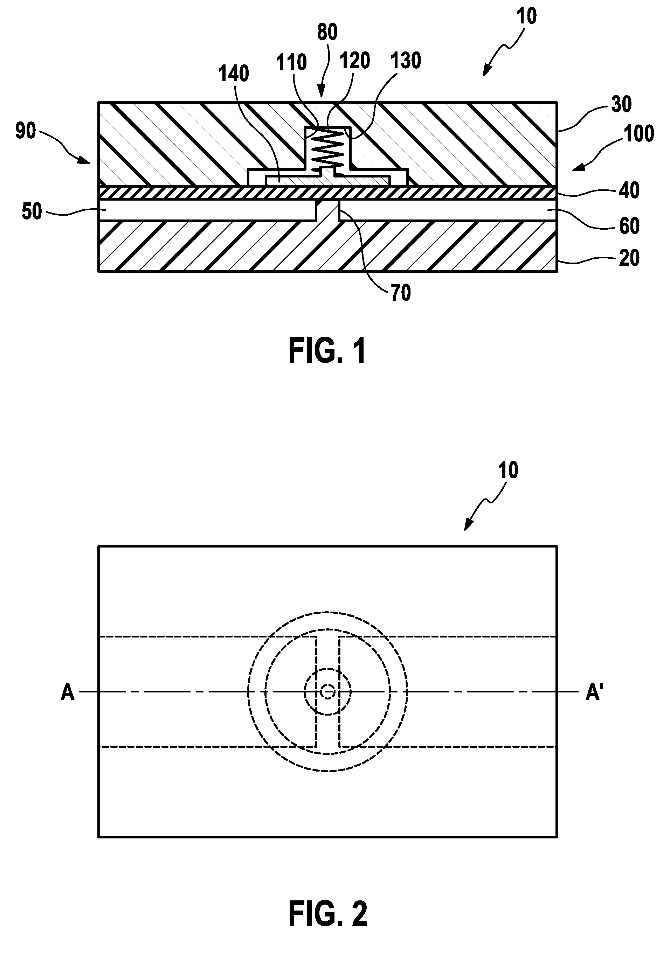

In dem Dokument "Platform for lab-on-a chip systems based on integrated active valves made in polymers suitable for mass production", J. Rupp et al, Mikrosystemtechnik Kongress 2009, Paper 78, ist in Figur 1 eine Querschnittsansicht eines mikrofluidischen Ventils dargestellt, welches aus einer oberen Substratkomponente und einer unteren Substratkomponente besteht, zwischen denen eine Membranschicht in sandwichartiger Weise angeordnet ist, und wobei sich in der unteren Substratkomponente Aussparungen für die wahlweise Aufnahme von Fluiden befinden, wobei die Aussparungen in der unteren Substratkomponente einerseits durch einen stegartigen Vorsprung getrennt sind, andererseits durch die Membranschicht, und zwar auch in Richtung auf die Aussparung in der oberen Substratkomponente. Dieser Zustand wird als geschlossener Ventilzustand bezeichnet. Bei Überdruck in einer Aussparung der unteren Substratkomponente verlagert sich die Membran von dem Vorsprung in Richtung in die Aussparung der oberen Substratkomponente und stellt so eine fluide Verbindung zwischen der einen Aussparung in der unteren Substratkomponente und der anderen Aussparung in der unteren Substratkomponente her, was als geöffneter Ventilzustand bezeichnet wird. Einzig die Flexibilität der Membranschicht bzw. die Kraft, mit der die Membranschicht auf den Vorsprung in der unteren Substratkomponente drückt, bestimmt die "Dichtheit" der Ventilanordnung im geschlossenen Zustand, d.h. ob ein Fluid von der einen Aussparung in der unteren Substratkomponente über den Vorsprung hinweg in die andere Aussparung in der unteren Substratkomponente gelangen kann oder nicht.

Aus dem Dokument DE 20 2012 001 202 U1 ist ein normal geschlossenes Ventil bekannt, wobei über eine Druckfeder ein Aktor aus Formgedächtnismaterial eine Schaltmembran gegen einen Ventilsitz drückt. Über eine Erwärmung des Aktors kann das Ventil geschaltet werden.

Die Erfindung schlägt ein System umfassend eine Ventilanordnung zur Verwendung in einem Mikrofluidiksystem und ein externes Schneidelement vor, wobei die Ventilanordnung umfasst: eine untere Substratkomponente mit wenigstens einer ersten Aussparung und einer zweiten Aussparung, wobei die Aussparungen zu Stirnflächen der Substratkomponente hin jeweils geöffnet sind, wobei die Aussparungen durch einen stegartigen Vorsprung voneinander getrennt sind; eine obere Substratkomponente, welche auf der unteren Substratkomponente befestigt ist, und welche wenigstens eine Aussparung aufweist, welche im Wesentlichen mittig zu der oberen Substratkomponente angeordnet ist; eine zwischen der oberen und unteren Substratkomponente angeordnete und für ein Fluid undurchdringbare elastische Membranschicht, welche die Aussparung bzw. Aussparungen der oberen bzw. unteren Substratkomponenten voneinander in abdichtender Weise trennt; und ein Federelement, welches in der Aussparung der oberen Substratkomponente angeordnet ist, und die Membranschicht auf den Vorsprung drückt, so dass sich die Ventilanordnung in einem ersten Betriebszustand befindet, welcher ein geschlossener Betriebszustand ist.

### Vorteile der Erfindung

Ein Vorteil der vorgeschlagenen Vorrichtung ergibt sich zunächst daraus, dass aufgrund der Bereitstellung des Federelements, welches mit einer vorbestimmten Kraft die Membranschicht auf den Vorsprung drückt, eine verbesserte und zuverlässigere Fähigkeit der Abdichtung der Ventilanordnung ermöglicht ist. Weiterhin lässt sich durch die Wahl der Eigenschaften des Federelements eine beliebige gewünschte "Druckkraft" erzeugen, und zwar je nach Anwendung der Ventilanordnung. Das Federelement lässt sich auch integral mit der oberen Substratkomponente ausbilden, so dass eine Herstellung relativ einfach und kostengünstig ist.

Vorzugsweise ist der Vorsprung direkt unterhalb der Aussparung angeordnet ist, was den Vorteil mit sich bringt, dass die Membranschicht durch das Federelement direkt auf den Vorsprung gedrückt wird, wodurch eine besonders gute Abdichtung der beiden durch den Vorsprung abgegrenzten Aussparungen erzielbar ist.

Vorteilhafterweise umfasst das Federelement der Ventilanordnung ein komprimierbares Material oder Einrichtung, welches bzw. welche eines der folgenden Materialien aufweist: Schraubenfeder aus Metall und/oder Kunststoff oder ein Schaumstoffmaterial, oder alternativ ein volumenförmiges Elastomer. Dies ist eine relativ kostengünstige Art und Weise der Ausbildung und Anordnung des Federelements.

Es wird bevorzugt, dass die Ventilanordnung eine Andruckplatte umfasst, welche in der Aussparung der oberen Substratkomponente angeordnet ist und mit Hilfe des Federelements gegen die Membranschicht und somit gegen den Vorsprung drückt, so dass eine fluide Abdichtung der ersten Aussparung gegenüber der zweiten Aussparung erzeugt ist. Hierbei ist von Vorteil, dass die von dem Federelement ausgeübte Kraft relativ gleichmäßig auf den Vorsprung ausgeübt wird, und somit eine verbesserte Abdichtung zwischen der einen Aussparung in der unteren Substratkomponente und der anderen Aussparung in der unteren Substratkomponente gegeben ist.

Erfindungsgemäß umfasst das Federelement wenigstens einen Federarm umfasst, dessen eines Ende an einer Wandung der Aussparung der oberen Substratkomponente befestigt ist, und an dessen anderem Ende ein stößelartiges Element befestigt ist, welches die Membranschicht aufgrund der Federkraft des Federarms gegen den Vorsprung drückt, und wobei die Aussparung durch die obere Substratkomponente hindurch durchgängig ist. Hierbei ist von Vorteil, dass, wie oben schon erwähnt, das Federelement relativ kostengünstig integral mit der oberen Substratkomponente ausbildbar ist. Dabei ist auch denkbar, dass stößelartige Element mit mehreren Federarmen ringsum verbunden ist. Somit wird ein Verrutschen des stößelartigen Elements auf der Membranschicht verringert, und die Gefahr einer Beschädigung der Membranschicht reduziert.

Es wird außerdem bevorzugt, dass die Ventilanordnung weiterhin eine Polymerschicht umfasst, welche die durchgängige Aussparung der oberen Substratkomponente auf der der Membranschicht gegenüberliegenden Seite der oberen Substratkomponente abdeckt, und von dem externen Schneidelement durchstoßbar ist, um so den wenigstens einen Federarm zu durchtrennen, so dass der auf die Membranschicht und den Vorsprung ausgeübte Druck entfernt ist, so dass die Membranschicht in der Lage ist, sich von dem Vorsprung zu lösen, um so eine fluide Verbindung zwischen der ersten Aussparung und der zweiten Aussparung herzustellen, so dass sich die Ventilanordnung in einem zweiten Betriebszustand befindet, welcher ein offener Betriebszustand ist. Hierbei ist von Vorteil, dass das integral ausgebildete Federelement einen relativ hohen Druck auf den Vorsprung ausüben kann, wodurch eine sehr große Abdichtungswirkung gegeben ist, was insbesondere bei einem Transport des LOC (wobei Druckdifferenzen aufgrund von Schwankungen des Luftdrucks auftreten können) mit einer solchen Ventilanordnung von Vorteil ist. Weiterhin ist von Vorteil, dass durch das externe Schneidelement in relativ einfacher Weise die Membranschicht aktuierbar ist, d.h. es ist kein zusätzlicher Anschluss zur Herstellung eines Unter- bzw. Überdrucks notwendig, um die Membranschicht anzuheben.

Vorzugsweise grenzt Material der unteren Substratkomponente direkt an die Membranschicht an, so dass das externe Schneidelement nach Durchtrennen des wenigstens einen Federarms auf die Membranschicht mit dem darunter angeordneten Material der unteren Substratkomponente stößt. Hierbei ist von Vorteil, dass ein gleichzeitiges Durchtrennen der Membranschicht nicht zu einem Ausfall der Ventilanordnung führt.

Vorteilhafterweise ist eine von dem Material der unteren Substratkomponente gebildete Aussparung in Form einer Durchgangsöffnung, welche durch die Membranschicht abgedeckt ist, kleiner als das stößelartige Element des Federarms ist. Hierbei ist von Vorteil, dass eine Diffusion durch die Membranschicht reduziert wird, und die Dichtheit der Ventilanordnung bei längeren Schließzeiten, z. B. einer Lagerung, verbessert wird. Auch lässt sich die Dicke der Membranschicht dadurch reduzieren.

Außerdem wird bevorzugt, dass die Aussparung der oberen Substratkomponente in fluider Verbindung mit einem von extern steuerbaren Zufuhrkanal steht, um in der Aussparung der oberen Substratkomponente in kontrollierbarer Weise einen Unterdruck zu erzeugen, um die Membranschicht von dem Steg abzuheben, um eine fluide Verbindung zwischen der ersten Aussparung und der zweiten Aussparung herzustellen, so dass sich die Ventilanordnung in dem zweiten Betriebszustand befindet, welcher der offene Betriebszustand ist. Hierbei ist von Vorteil, dass durch Erzeugen eines Unterdrucks in der Aussparung der oberen Substratkomponente in relativ sicherer Weise die Membranschicht von dem Vorsprung abgehoben werden kann, um eine fluide Verbindung zwischen den Aussparungen bzw. Reservoiren der unteren Substratkomponente zuzulassen.

### Kurze Beschreibung der Zeichnungen

Nachfolgend wird die Erfindung anhand von Ausführungsformen in Verbindung mit den Figuren erläutert, wobei:
- Figur 1: eine seitliche Querschnittsansicht einer Ventilanordnung gemäß einer Ausführungsform der Erfindung zeigt;
- Figur 2: eine Draufsicht auf die in Fig. 1 gezeigte Ventilanordnung zeigt;
- Figur 3: eine seitliche Querschnittsansicht einer Ventilanordnung gemäß einer weiteren Ausführungsform der Erfindung zeigt;
- Figur 4: eine Draufsicht auf die in Fig. 3 gezeigte Ventilanordnung zeigt;
- Figur 5: eine seitliche Querschnittsansicht einer Ventilanordnung gemäß einer weiteren Ausführungsform der Erfindung zeigt;
- Figur 6: eine seitliche Querschnittsansicht einer Ventilanordnung gemäß einer weiteren Ausführungsform der Erfindung zeigt;
- Figur 7: eine Draufsicht auf die in Fig. 6 gezeigte Ventilanordnung zeigt;
- Figur 8: eine Draufsicht auf eine Ventilanordnung gemäß einer weiteren Ausführungsform der Erfindung zeigt;
- Figur 9: eine seitliche Querschnittsansicht einer Ventilanordnung gemäß einer weiteren Ausführungsform der Erfindung zeigt; und
- Figur 10: eine Draufsicht auf die in Fig. 9 gezeigte Ventilanordnung zeigt.

### Ausführungsformen der Erfindung

Anhand von Figuren 1 und 2 soll nun eine erste Ausführungsform der Erfindung erläutert werden.

Figur 2 zeigt eine Ventilanordnung 10 in einer Draufsicht. Im dargestellten Beispiel in Figur 2 weist die Ventilanordnung 10 einen im Wesentlichen rechteckigen Grundriss auf, wobei auch andere Grundrissformen denkbar sind. Mit gestrichelten Linien innerhalb der Ventilanordnung 10 sind Aussparungen angedeutet, welche anhand eines in Figur 1 dargestellten seitlichen Querschnitts nunmehr erläutert werden sollen.

Figur 1 zeigt eine seitliche Querschnittsansicht entlang der in Figur 2 dargestellten Linie A-A'.

Die Ventilanordnung 10 umfasst eine untere Substratkomponente 20 und eine obere Substratkomponente 30. Die beiden Substratkomponenten 20, 30 sind aufeinander angeordnet, wobei sich dazwischen eine elastische Membranschicht 40 befindet. In der unteren Substratkomponente 20 ist eine Aussparung 50 und eine Aussparung 60 ausgebildet, welche durch einen stegartigen Vorsprung 70 voneinander getrennt sind. Die Aussparungen 50, 60 dienen als mit Fluid-Reservoiren in fluider Verbindung stehenden Kanälen, wobei der stegartige Vorsprung 70 in Kombination mit der Membranschicht 40 und einem noch weiter zu erläuternden Federelement 80 als ein steuerbares Ventil dient, um beispielsweise ein in der Aussparung bzw. dem Reservoir 50 befindliches Fluid in kontrollierter Weise in die Aussparung bzw. das Reservoir 60 gelangen zu lassen. Die Aussparungen 50, 60 sind zu den Stirnseiten 90, 100 der Ventilanordnung 10 geöffnet, so dass die Ventilanordnung 10 mit anderen hier nicht dargestellten Komponenten auf einem LOC in fluider Weise verbunden werden kann.

Das Federelement 80 ist in einer Aussparung 110 der oberen Substratkomponente 30 angeordnet, und besteht im dargestellten Beispiel in Figur 1 aus einer Druckfeder 120 aus Metall. Als Material für das Federelement 80 sind selbstverständlich auch andere Materialien vorstellbar, solange sie eine (in der Zeichnung nach unten gerichtete) Kraft in Richtung auf den stegartigen Vorsprung 70 ausüben. Als Gegenlager der Druckfeder 120 dient hierbei der "Boden" 130 der Aussparung 110.

Wie weiterhin in Figur 1 zu erkennen ist, ist die Feder 120 mit einer Andruckplatte 140 verbunden, welche für eine gleichmäßige Verteilung der von der Feder 120 ausgeübten Kraft auf die Membranschicht 40 bzw. den Vorsprung 70 sorgen soll. Beispielhaft seien einige Abmessungen des in Figur 2 dargestellten Ausführungsbeispiels genannt:
Durchmesser der Feder 120: 1 mm bis 20 mm
Länge der Feder (komprimiert): 3 mm bis 50 mm
Durchmesser der Andruckplatte 140: 1 mm bis 20 mm

Ansonsten sei an dieser Stelle darauf hingewiesen, dass alle in Figuren 1 bis 10 dargestellten Zeichnungen nicht notwendigerweise maßstabsgetreu sind.

Die Membranschicht 40 kann aus einem Polymermaterial hergestellt sein, ebenso wie die untere Substratkomponente 20 und die obere Substratkomponente 30. Auch hier sind entsprechende andere geeignete Materialien denkbar. Ein Vorteil der Verwendung von Polymersubstrat für die Komponenten ist, dass die Ausbildung der Aussparungen bzw. des stegartigen Vorsprungs 70 relativ einfach ist.

Die in Figur 1 dargestellte Ventilanordnung 10 befindet sich in einem geschlossenen Zustand (Normalzustand), und durch Anlegen eines Überdrucks beispielsweise an die Aussparung bzw. das Reservoir 50 kann die Membranschicht 40 entgegen der Federkraft der Feder 120 (und gegebenenfalls einer der Membranschicht 40 selbst innewohnenden "Kraft") von dem stegartigen Vorsprung 70 in Richtung der Aussparung 110 in der oberen Substratkomponente 30 verlagert werden, so dass eine fluide Verbindung zwischen der Aussparung 50 und der Aussparung 60 besteht, das heißt, dass ein in der Figur 1 nicht dargestelltes Fluid, welches sich in Aussparung 50 befindet, nunmehr in die Aussparung 60 gelangen kann, beispielsweise um dort einer entsprechenden Reaktion unterzogen zu werden oder einfach nur in eine weitere hier nicht dargestellte Komponente weitergeleitet zu werden.

In analoger Weise ist es natürlich auch denkbar, dass ein Überdruck an die Aussparung bzw. das Reservoir 60 angelegt werden kann, um eine fluide Verbindung zwischen den beiden Aussparungen 50 und 60 herzustellen.

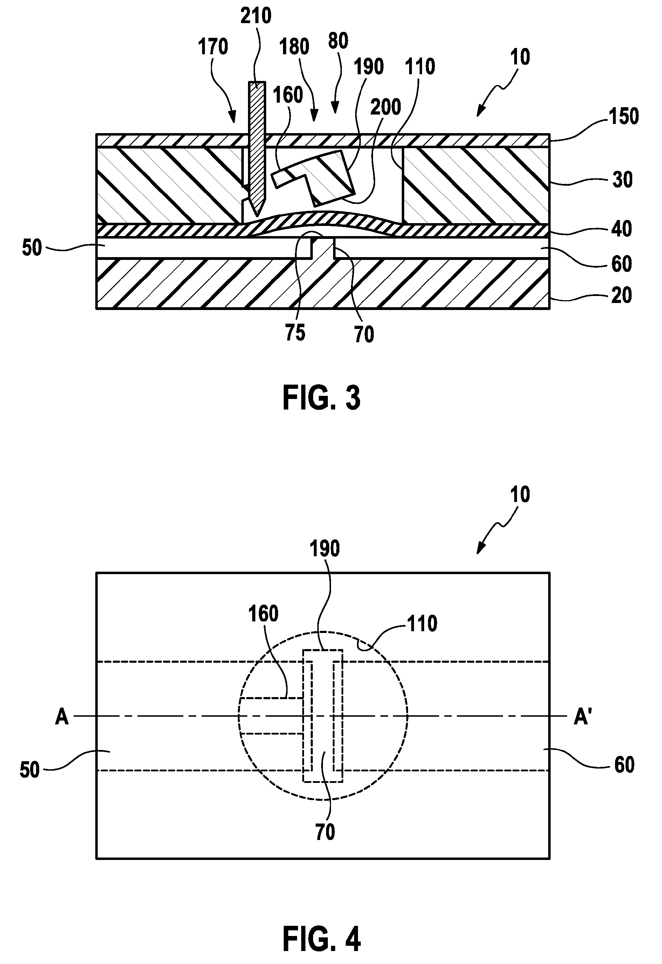

In Figur 3 ist eine weitere Ausführungsform einer Ventilanordnung in einem seitlichen Querschnitt, analog zu der Darstellung in Figur 1, dargestellt.

Es sei an dieser Stelle darauf hingewiesen, dass gleiche Bezugszeichen sich durchgehend in der Beschreibung und den Figuren auf gleiche bzw. gleichartige Elemente beziehen.

Wiederum besteht die Ventilanordnung 10 aus einer unteren Substratkomponente 20 und einer oberen Substratkomponente 30, welche in Sandwich-artiger Weise durch eine Membranschicht 40 voneinander getrennt sind. Wiederum weist, wie in Figur 1 dargestellt, die untere Substratkomponente 20 eine Aussparung 50, eine Aussparung 60 sowie einen stegartigen Vorsprung 70 auf.

Im Unterschied zur Darstellung in Figur 1 weist die obere Substratkomponente 30 eine durchgängige Aussparung 110 auf, welche, wie auch in allen anderen dargestellten Ausführungsformen im Wesentlichen mittig in Bezug auf die Ventilanordnung 10 ausgebildet ist. Nach oben hin ist die obere Substratkomponente 30 durch eine Folie 150 versiegelt, welche ebenfalls aus einem Polymermaterial bestehen kann.

Das Federelement 80 besteht in Figur 3, im Gegensatz zur Darstellung in Figur 1, aus einem Federarm 160, welcher an einem Ende 170 an einer Innenseite der Aussparung 110 befestigt ist, und an einem anderen Ende 180 ein stößelartiges Element 190 aufweist, welches eine Fläche 200 aufweist, welche breiter als eine Breite 75 des Vorsprungs 70 ist. Somit wird sichergestellt, dass die Membranschicht 40 auf die gesamte Breite 75 des Vorsprungs 70 gedrückt wird. Die Federkraft, welche das stößelartige Element 190 auf die Membran 40 bzw. den Vorsprung 70 drücken lässt, kommt durch die dem Federarm 160 innewohnende "Balkenspannung" zustande. Im noch nicht zusammengesetzten Zustand der Ventilanordnung 10 würde nämlich das stößelartige Element 190 etwas aus der Aussparung 110 in Richtung des Vorsprunges 70 herausragen. Durch das Zusammensetzen der Ventilanordnung 10 wird das stößelartige Element 190 bzw. der Federarm 160 durch die Membranschicht 40 bzw. den Vorsprung 70 in die Aussparung 110 hineingedrückt, so dass das Federelement 80 in Bezug auf die Membranschicht 40 bzw. den Vorsprung 70 vorgespannt ist. Dabei kann der Betrag der Vorspannung beliebig durch Dimensionieren des Federarms 160 bzw. des stößelartigen Elements 190 ausgebildet werden.

In Figur 3 ist weiterhin ein externes Schneidelement 210 dargestellt, welches zum Beispiel die Spitze eines Skalpells sein kann, wobei das Schneidelement 210 von einem Nutzer durch eine Folie 150 gestoßen werden muss, um den Federarm 160 zu durchtrennen. Denkbar ist auch ein automatisierter Vorgang des Durchtrennens, beispielsweise beim Einlegen des LOC (bzw. der LOC-Kartusche) in eine externe Einrichtung zum Ansteuern des LOC. Somit entfällt die Kraft auf die Membranschicht 40 bzw. den Vorsprung 70, und es kommt eine fluide Verbindung zwischen der Aussparung 50 und der Aussparung 60 zustande, wenn beispielsweise in der Aussparung 50 ein Überdruck (hier nicht dargestellt) erzeugt wird.

Hierbei wird bevorzugt, dass das Federelement 80, bestehend aus dem Federarm 160 und dem stößelartigen Element 190, in integraler Weise aus dem gleichen Material wie die obere Substratkomponente 30 hergestellt ist. Dies ist eine relativ kostengünstige Herstellungsart, da auf zusätzliche separate Federn verzichtet werden kann.

Es sei bemerkt, dass die Folie 150 nicht unbedingt notwendig ist, aber bei Aufbringung auf die obere Substratkomponente 30 eine das Federelement 80 schützende Funktion, beispielsweise während des Transports, haben kann.

Figur 4 zeigt eine Draufsicht auf die in Figur 3 dargestellte Ventilanordnung 10. Dabei sind mit gestrichelten Linien die Aussparungen 50 und 60 in der unteren Substratkomponente 20 (in Figur 4 nicht erkennbar) angedeutet, sowie die Aussparung 110 in der oberen Substratkomponente 30. Weiterhin ist mit gestrichelter Linie der Federarm 160 mit dem daran befestigten stößelartigen Element 190 angedeutet. Hierbei ist vor allem zu erkennen, dass das stößelartige Element 190 etwas breiter als der ebenfalls mit gestrichelten Linien dargestellte Vorsprung 70 ist. Die in Figur 3 dargestellte Querschnittsansicht ist entlang der Linie A-A' gezeigt.

Der Vorteil der Ausführungsformen mit Federarm 160 besteht darin, dass eine relativ hohe auf den Vorsprung 70 bzw. die Membranschicht 40 wirkende Kraft gewählt werden kann, so dass eine relativ hohe Abdichtung zwischen Aussparung 50 bzw. Aussparung 60, zum Beispiel während eines Transports bzw. einer längeren Schließzeit (zum Beispiel Lagerung), gewährleistet ist.

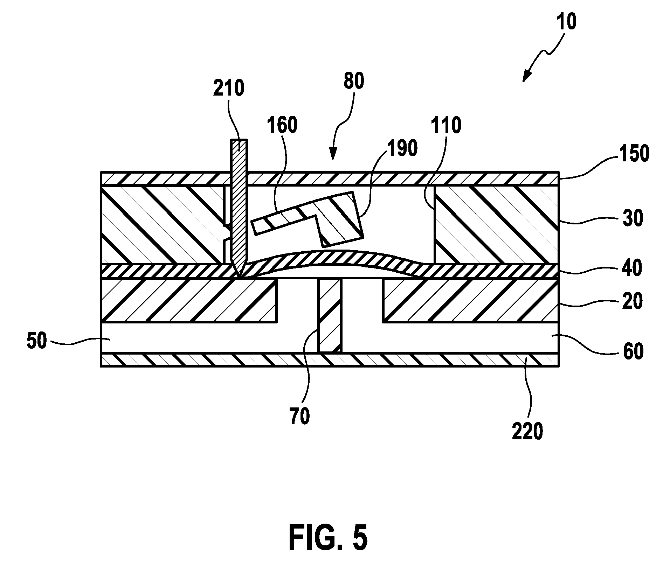

Figur 5 zeigt eine weitere Ausführungsform einer Ventilanordnung 10. Im Unterschied zur in Figur 3 dargestellten Ausführungsform ist die untere Substratkomponente 20 anders ausgebildet, das heißt die Aussparungen 50, 60 sind teilweise auf der der Membranschicht 40 gegenüberliegenden Seite der unteren Substratkomponente ausgebildet, so dass Material der unteren Substratkomponente 20 entlang eines Abschnitts der Membranschicht 40 mit dieser direkt in Kontakt ist. Da die obere Substratkomponente 30 im Wesentlichen analog zu der in Figur 3 dargestellten oberen Substratkomponente 30 ausgebildet ist, das heißt, das Federelement 80 weist wieder einen Federarm 160 sowie ein daran befestigtes stößelartiges Element 190 und eine als Abdeckung dienende Folie 150 auf, bei einem Durchstechen der Folie 150 und Durchtrennens des Federarms 160 mit einem externen Schneidelement 210 das Schneidelement 210 auf die Membranschicht 40 treffen und diese auch "beschädigen" kann, aber die Funktion der Ventilanordnung 10 dadurch nicht beeinträchtigt wird, da sich unterhalb des Schneidelements 210 Material der unteren Substratkomponente 20 befindet und ein weiteres Vordringen des Schneidelements 210 somit verhindert.

Ansonsten ist in Figur 5 noch zu erkennen, dass die untere Substratkomponente 20 nach "unten" hin durch eine Folie 220 abgedeckt ist.

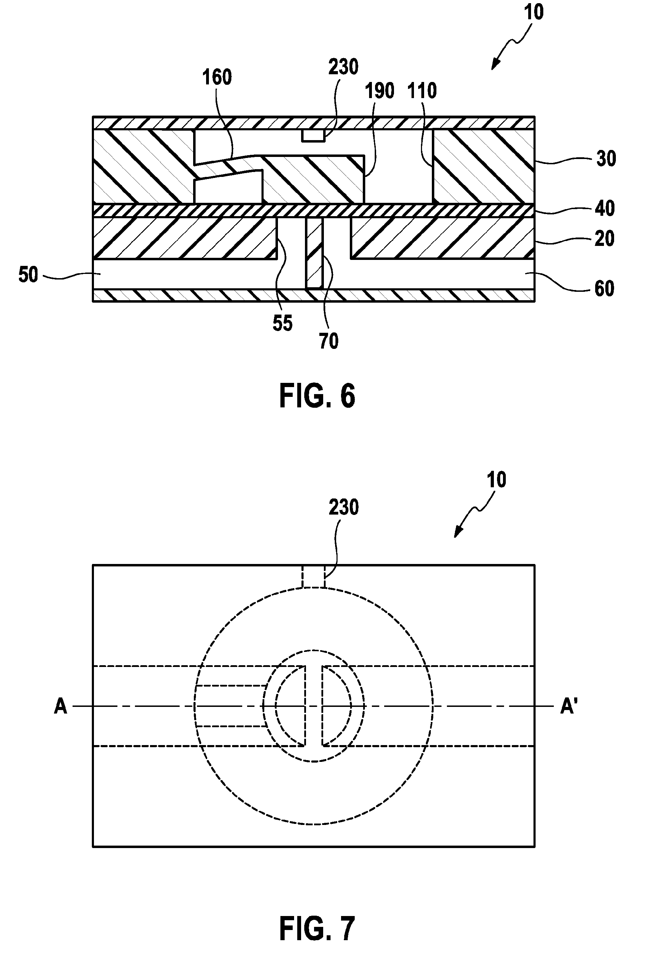

Figur 6 zeigt eine weitere Ausführungsform einer Ventilanordnung 10.

Im Unterschied zur in Figur 5 dargestellten Ausführungsform befindet sich die Ventilanordnung 10 in Figur 6 im geschlossenen Zustand, das heißt der Federarm 160 ist nicht durchtrennt, wobei ansonsten der Aufbau der in Figur 6 dargestellten Ausführungsform der zuvor beschriebenen Ausführungsform entspricht. Ein Unterschied zwischen den in Figuren 5 bzw. 6 dargestellten Ausführungsformen besteht jedoch darin, dass in die Aussparung 110 in der oberen Substratkomponente 30 ein Fluidkanal 230 führt, über den von außen ein Unterdruck in der Aussparung 110 erzeugt werden kann, so dass nach Durchtrennung oder auch nicht-vollständiger Durchtrennung bzw. Schwächung (bei entsprechender Auslegung des Federarms 160 hinsichtlich der ausübenden Kraft) des Federarms 160 (hier nicht dargestellt) die Membranschicht 40 (bei nichtvollständiger Durchtrennung zusammen mit dem Federarm 160) von dem Vorsprung 70, welcher sich in einer mittig in der unteren Substratkomponente 20 ausgebildeten Aussparung 55, welche sich zur Membranschicht 40 hin öffnet, befindet, abgehoben werden kann, um so eine Fluidverbindung zwischen Aussparung 50 und Aussparung 60 in der unteren Substratkomponente 20 herzustellen, ohne dass ein Überdruck an Aussparung 50 bzw. Aussparung 60 angelegt werden müsste, um das Ventil zu öffnen. Es sei noch bemerkt, dass eine Breite des stößelartigen Elements 190 eine Breite der Aussparung 55 überdeckt.

Figur 7 zeigt eine Draufsicht der in Figur 6 im seitlichen Querschnitt dargestellten Ausführungsform, wobei in Figur 7 insbesondere auf den mit gestrichelter Linie dargestellten Fluidkanal 230 zum Anlegen eines Unterdrucks von außerhalb der Ventilanordnung 10 hingewiesen werden soll.

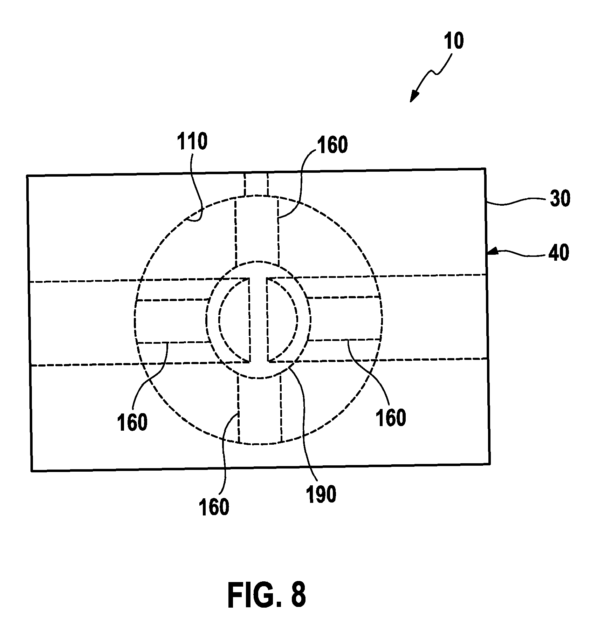

Figur 8 zeigt eine weitere Ausführungsform einer Ventilanordnung 10, und zwar in einer Draufsicht, wobei hierbei erkennbar ist, dass das stößelartige Element 190 über vier Federarme 160 mit der Wandung der Aussparung 110 in der oberen Substratkomponente 30 verbunden ist. Dies hat insbesondere den Vorteil, dass die Kraft des stößelartigen Elements 190 gleichmäßiger verteilt kann. Bei dieser Ausführungsform in Figur 8 ist es besonders vorteilhaft, das externe Schneidelement (hier nicht dargestellt) kreisförmig auszubilden, um alle Federarme 160 gleichzeitig abzutrennen. Dabei wird ein Verrutschen des stößelartigen Elementes 190 auf der Membranschicht 40 (hier nicht erkennbar) verringert, und es wird die Gefahr einer Beschädigung der Membranschicht 40 reduziert.

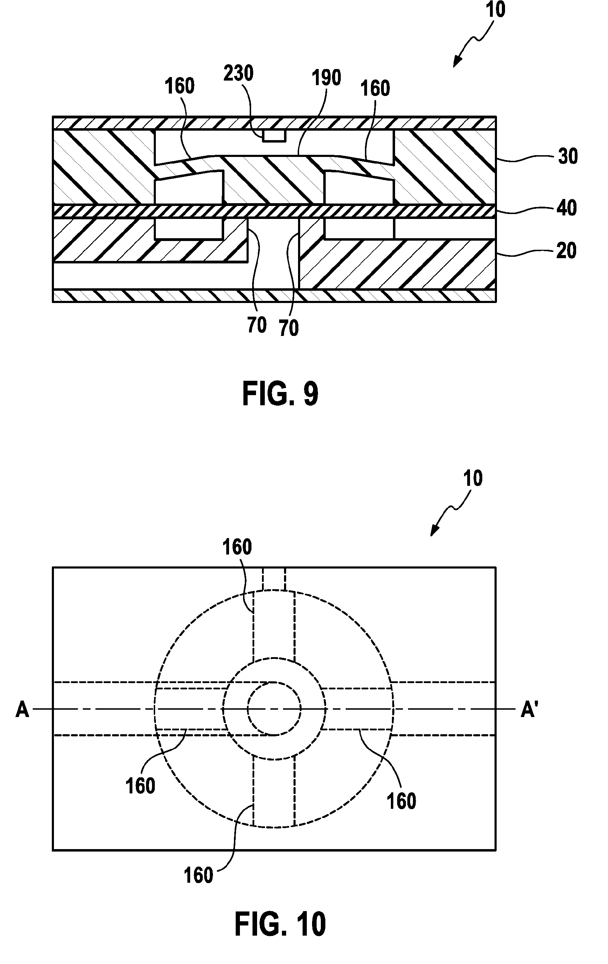

Figur 9 zeigt eine weitere Ausführungsform einer Ventilanordnung 10. Hierbei ist insbesondere entscheidend, dass das stößelartige Element 190 wieder über vier Federarme 160 (siehe Fig. 10) mit der Wandung der Aussparung 110 der oberen Substratkomponente 30 verbunden ist, wie es bereits bei der in Figur 8 dargestellten Ausführungsform der Fall ist, und wie besser in der Draufsicht der in Figur 10 dargestellten Ventilanordnung 10 erkennbar ist. Besonders hervorzuheben ist bei der in Figur 9 bzw. Figur 10 dargestellten Ausführungsform der Ventilanordnung 10, dass das stößelartige Element 190 auf einem in der unteren Substratkomponente 20 kreisförmig ausgebildeten Vorsprung 70 "ruht", wobei sich dazwischen die Membranschicht 40 befindet, was den Vorteil einer gleichmäßigeren bzw. symmetrischeren Kraft- bzw. Druckverteilung des stößelartigen Elements 190 auf den Vorsprung 70 mit sich bringt, und somit eine besonders hohe Abdichtung ergibt.

Es ist selbstverständlich, dass das Schneidelement (hier nicht dargestellt) zur Durchtrennung der Federarme 160, wie im obigen Fall, kreisförmig ausgebildet sein müsste, so dass alle vier Federarme 160 gleichzeitig durchtrennt werden. Die nötigen Strukturen bzw. Aussparungen in den Substratkomponenten 20, 30 können beispielsweise durch Fräsen, Spritzguss, Heißprägen oder Laserstrukturierung erzeugt werden.

Als Materialien mögen folgende Beispiele dienen:
Polymersubstrat: Thermoplaste (zum Beispiel PC, PP, PE, PMMA, COP, COC) Polymermembran: Elastomerfolien, thermoplastisches Elastomer, thermoplastische Folien, Heißklebefolien
Beispielhafte Abmessungen der oben genannten Ausführungsbeispiele können wie folgt sein:
   Dicke Polymersubstrat: 0,5 bis 10 mm
   Kanaldurchmesser in den Polymersubstraten: 200 µm bis 3 mm
   Durchmesser der Öffnungen (Aussparungen) in den Polymersubstraten: 50 µm bis 20 mm
   Dicke der Polymermembran: 5 bis 300 µm
   Laterale Abmessungen des gesamten Ausführungsbeispiels (Ventilanordnung 10): 10 x 10 bis 200 x 200 mm².

## Patentansprüche

1. System umfassend eine Ventilanordnung (10) zur Verwendung in einem Mikrofluidiksystem und ein externes Schneidelement (210), die Ventilanordnung (10) umfassend:
- eine untere Substratkomponente (20) mit wenigstens einer ersten Aussparung (50) und einer zweite Aussparung (60), wobei die Aussparungen (50, 60) zu Stirnflächen (90, 100) der Substratkomponente (20) hin jeweils geöffnet sind, wobei die Aussparungen (50, 60) durch einen stegartigen Vorsprung (70) voneinander getrennt sind;
- eine obere Substratkomponente (30), welche auf der unteren Substratkomponente (20) befestigt ist, und welche wenigstens eine Aussparung (110) aufweist, welche im Wesentlichen mittig zu der oberen Substratkomponente (30) angeordnet ist;
- eine zwischen der oberen (30) und unteren Substratkomponente (20) angeordnete und für ein Fluid undurchdringbare elastische Membranschicht (40), welche die Aussparung bzw. Aussparungen (50, 60, 110) der oberen bzw. unteren Substratkomponenten (30, 20) voneinander in abdichtender Weise trennt; und
- ein Federelement (80), welches in der Aussparung (110) der oberen Substratkomponente (30) angeordnet ist und die Membranschicht (40) auf den Vorsprung (70) drückt, so dass sich die Ventilanordnung (10) in einem ersten Betriebszustand befindet, welcher ein geschlossener Betriebszustand ist,
wobei
das Federelement (80) wenigstens einen Federarm (160) umfasst, dessen eines Ende (170) an einer Wandung der Aussparung (110) der oberen Substratkomponente (30) befestigt ist, und an dessen anderem Ende (180) ein stößelartiges Element (190) befestigt ist, welches die Membranschicht (40) aufgrund der Federkraft des Federarms (160) gegen den Vorsprung (70) drückt, und wobei die Aussparung (110) durch die obere Substratkomponente (30) hindurch durchgängig ist und wobei der Federarm (160) von dem externen Schneideelement (210) durchtrennbar ausgeführt ist.

2. System (10) nach Anspruch 1, wobei der Vorsprung (70) direkt unterhalb der Aussparung (110) der oberen Substratkomponente (30) angeordnet ist.

3. System (10) nach Anspruch 1 oder 2, wobei das Federelement der Vntilanordnung ein komprimierbares Material oder eine Einrichtung umfasst, welches bzw. welche eines der folgenden Materialien aufweist: Schraubenfeder aus Metall und/oder Kunststoff oder ein Schaumstoffmaterial, oder alternativ ein volumenförmiges Elastomer.

4. System (10) nach Anspruch 1, wobei der wenigstens eine Federarm (160) und das stößelartige Element (190) aus dem gleichen Material wie die obere Substratkomponente (30) in integraler Weise ausgebildet sind.

5. System (10) nach Anspruch 1, weiterhin umfassend eine Polymerschicht (150), welche die durchgängige Aussparung (110) der oberen Substratkomponente (30) auf der der Membranschicht (40) gegenüberliegenden Seite der oberen Substratkomponente (30) abdeckt, und von einem externen Schneidelement (210) durchstoßbar ist, um so den wenigstens einen Federarm (160) zu durchtrennen, so dass der auf die Membranschicht (40) und den Vorsprung (70) ausgeübte Druck entfernt ist, so dass die Membranschicht (40) in der Lage ist, sich von dem Vorsprung (70) zu lösen, um so eine fluide Verbindung zwischen der ersten Aussparung (50) und der zweiten Aussparung (60) herzustellen, so dass sich die Ventilanordnung (10) in einem zweiten Betriebszustand befindet, welcher ein offener Betriebszustand ist.

6. System (10) nach Anspruch 1, wobei Material der unteren Substratkomponente (20) direkt an die Membranschicht (40) angrenzt, so dass das externe Schneidelement (210) nach Durchtrennen des wenigstens einen Federarms (160) auf die Membranschicht (40) mit dem darunter angeordneten Material der unteren Substratkomponente (20) stößt.

7. System (10) nach einem der Ansprüche 4 bis 6, wobei eine von dem Material der unteren Substratkomponente (20) gebildete Aussparung (53) in Form einer Durchgangsöffnung, welche durch die Membranschicht (40) abgedeckt ist, kleiner als das stößelartige Element (190) des Federarms (160) ist.

8. System (10) nach einem der vorangehenden Ansprüche, wobei die Aussparung (110) der oberen Substratkomponente (30) in fluider Verbindung mit einem steuerbaren Zufuhrkanal (230) steht, um in der Aussparung (110) der oberen Substratkomponente (30) in kontrollierbarer Weise einen Unterdruck zu erzeugen, um die Membranschicht (40) von dem Vorsprung (70) abzuheben, um eine fluide Verbindung zwischen der ersten Aussparung (50) und der zweiten Aussparung (60) herzustellen, so dass sich die Ventilanordnung (10) in dem zweiten Betriebszustand befindet, welcher der offene Betriebszustand ist.

9. Verfahren zur Überführung einer Ventilanordnung (10) eines Systems nach einem der vorangehenden Ansprüche von dem ersten, geschlossenen Betriebszustand in einen zweiten, offenen Betriebszustand,
**gekennzeichnet durch** ein Durchtrennen des Federarms (160) **durch** das externe Schneideelement (210), wodurch das Federelement (80) nicht mehr die Membranschicht (40) auf den Vorsprung (70) drückt, so dass die Membranschicht (40) sich von dem Vorsprung (70) lösen kann, um eine fluide Verbindung zwischen der ersten Aussparung (50) und der zweiten Aussparung (60) herzustellen.

## Claims

1. System comprising a valve arrangement (10) for use in a microfluidic system and an external cutting element (210), the valve arrangement (10) comprising:
- a lower substrate component (20) with at least a first cut-out (50) and a second cut-out (60), the cut-outs (50, 60) being open in each case towards end faces (90, 100) of the substrate component (20), the cut-outs (50, 60) being separated from one another by way of a web-like projection (70);
- an upper substrate component (30) which is fastened on the lower substrate component (20), and which has at least one cut-out (110) which is arranged substantially centrally with respect to the upper substrate component (30);
- an elastic diaphragm layer (40) which is arranged between the upper (30) and lower substrate component (20), cannot be penetrated by a fluid, and separates the cut-out or cut-outs (50, 60, 110) of the upper and lower substrate components (30, 20) from one another in a sealing manner; and
- a spring element (80) which is arranged in the cut-out (110) of the upper substrate component (30) and presses the diaphragm layer (40) onto the projection (70), with the result that the valve arrangement (10) is situated in a first operating state which is a closed operating state,
the spring element (80) comprising at least one spring arm (160), the one end (170) of which is fastened to a wall of the cut-out (110) of the upper substrate component (30), and to the other end (180) of which a plunger-like element (190) is fastened which presses the diaphragm layer (40) against the projection (70) on account of the spring force of the spring arm (160), and the cut-out (110) being continuous through the upper substrate component (30), and the spring arm (160) being configured such that it can be severed by the external cutting element (210).

2. System (10) according to Claim 1, the projection (70) being arranged directly below the cut-out (110) of the upper substrate component (30).

3. System (10) according to Claim 1 or 2, the spring element of the valve arrangement comprising a compressible material or a device which has one of the following materials: helical spring made from metal and/or plastic or a foam material, or, as an alternative, a block-shaped elastomer.

4. System (10) according to Claim 1, the at least one spring arm (160) and the plunger-like element (190) being configured in an integral manner from the same material as the upper substrate component (30).

5. System (10) according to Claim 1, comprising, furthermore, a polymer layer (150) which covers the continuous cut-out (110) of the upper substrate component (30) on that side of the upper substrate component (30) which lies opposite the diaphragm layer (40), and can be broken through by an external cutting element (210), in order thus to sever the at least one spring arm (160), with the result that the pressure which is exerted on the diaphragm layer (40) and the projection (70) is removed, with the result that the diaphragm layer (40) is capable of detaching itself from the projection (70), in order thus to establish a fluidic connection between the first cut-out (50) and the second cut-out (60), with the result that the valve arrangement (10) is situated in a second operating state which is an open operating state.

6. System (10) according to Claim 1, material of the lower substrate component (20) adjoining the diaphragm layer (40) directly, with the result that, after severing of the at least one spring arm (160), the external cutting element (210) butts onto the diaphragm layer (40) with the material arranged underneath of the lower substrate component (20).

7. System (10) according to one of Claims 4 to 6, a cut-out (53) which is formed from the material of the lower substrate component (20) in the form of a through opening which is covered by the diaphragm layer (40) being smaller than the plunger-like element (190) of the spring arm (160).

8. System (10) according to one of the preceding claims, the cut-out (110) of the upper substrate component (30) being in fluidic connection with a controllable feed duct (230), in order to generate a vacuum in a controllable manner in the cut-out (110) of the upper substrate component (30), in order to lift the diaphragm layer (40) up from the projection (70), in order to establish a fluidic connection between the first cut-out (50) and the second cut-out (60), with the result that the valve arrangement (10) is situated in the second operating state which is the open operating state.

9. Method for transferring a valve arrangement (10) of a system according to one of the preceding claims from the first, closed operating state into a second, open operating state,
**characterized by** severing of the spring arm (160) by way of the external cutting element (210), as a result of which the spring element (80) no longer presses the diaphragm layer (40) onto the projection (70), with the result that the diaphragm layer (40) can detach itself from the projection (70), in order to establish a fluidic connection between the first cut-out (50) and the second cut-out (60).

## Revendications

1. Système comprenant
un ensemble de soupape (10) destiné à être utilisé dans un système microfluide et
un élément externe de coupe (210),
l'ensemble de soupape (10) comprenant :
un composant inférieur de substrat (20) présentant au moins une première découpe (50) et une deuxième découpe (60), chacune des découpes (50, 60) étant ouverte sur une surface frontale (90, 100) du composant de substrat (20), les découpes (50, 60) étant séparées l'une de l'autre par une saillie (70) en forme de nervure,
un composant supérieur de substrat (30) fixé sur le composant inférieur de substrat (20) et présentant au moins une découpe (110) disposée essentiellement au milieu du composant supérieur de substrat (30),
une couche élastique de membrane (40) disposée entre le composant supérieur (30) et le composant inférieur (20) de substrat et imperméable aux fluides, qui sépare mutuellement de manière hermétique la découpe ou les découpes (50, 60, 110) du composant supérieur et du composant inférieur de substrat (30, 20) et
un élément élastique (80) disposé dans la découpe (110) ménagée dans le composant supérieur de substrat (30) et qui repousse la couche de membrane (40) contre la saillie (70) de telle sorte que l'ensemble de soupape (10) soit situé dans un premier état de fonctionnement qui est un état de fonctionnement fermé,
l'élément élastique (80) comportant au moins un bras élastique (160) dont une extrémité (170) est fixée sur une paroi de la découpe (110) ménagée dans le composant supérieur de substrat (30), un élément (190) en forme de poussoir qui repousse la couche de membrane (40) contre la saillie (70) sous l'action de la force élastique du bras élastique (160) étant fixé à son autre extrémité (180), la découpe (110) traversant le composant supérieur de substrat (30) et le bras élastique (160) étant réalisé de manière à pouvoir être découpé par l'élément externe de coupe (210).

2. Système (10) selon la revendication 1, dans lequel la saillie (70) est disposée directement en dessous de la découpe (110) ménagée dans le composant supérieur de substrat (30).

3. Système (10) selon les revendications 1 ou 2, dans lequel l'élément élastique de l'ensemble de soupape comporte un matériau compressible ou un dispositif compressible qui présentent l'un des matériaux suivants :
un ressort hélicoïdal en métal et/ou en matière synthétique ou un matériau en mousse, ou en variante un élastomère façonné en volume.

4. Système (10) selon la revendication 1, dans lequel le ou les bras élastiques (160) et l'élément (190) en forme de poussoir sont formés du même matériau que le composant supérieur de substrat (30) et d'un seul tenant avec ce dernier.

5. Système (10) selon la revendication 1, comprenant en outre une couche polymère (150) qui recouvre la découpe (110) qui traverse le composant supérieur de substrat (30) sur le côté du composant supérieur de substrat (30) situé face à la couche de membrane (40) et qui peut être perforé par un élément externe de coupe (210) pour ainsi séparer le ou les bras élastiques (160) de telle sorte que la poussée exercée par la couche de membrane (40) et la saillie (70) soit supprimée de sorte que la couche de membrane (40) puisse se détacher de la saillie (70) pour ainsi établir une liaison hydraulique entre la première découpe (50) et la deuxième découpe (60) de telle sorte que l'ensemble de soupape (10) soit dans un deuxième état de fonctionnement qui est un état ouvert.

6. Système (10) selon la revendication 1, dans lequel le matériau du composant inférieur de substrat (20) est directement adjacent à la couche de membrane (40) de telle sorte que l'élément externe de coupe (210) vienne buter contre la couche de membrane (40) et le matériau du composant inférieur de substrat (20) disposé en dessous d'elle après la séparation du ou des bras élastiques (160).

7. Système (10) selon l'une des revendications 4 à 6, dans lequel une découpe (53) formée par le matériau du composant inférieur de substrat (20) et présentant la forme d'une ouverture de passage recouverte par la couche de membrane (40) est plus petite que l'élément (190) en poussoir du bras élastique (160).

8. Système (10) selon l'une des revendications précédentes, dans lequel la découpe (110) ménagée dans le composant supérieur de substrat (30) est en liaison hydraulique avec un canal d'amenée (230) asservi pour former dans la découpe (110) du composant supérieur de substrat (30) une dépression de manière contrôlée pour relever la couche de membrane (40) de la saillie (70) de manière à établir une liaison hydraulique entre la première découpe (50) et la deuxième découpe (60) de telle sorte que l'ensemble de soupape (10) se trouve dans le deuxième état de fonctionnement qui est l'état de fonctionnement ouvert.

9. Procédé servant à faire passer un ensemble de soupape (10) d'un système selon l'une des revendications précédentes du premier état de fonctionnement fermé à un deuxième état de fonctionnement ouvert,
**caractérisé par**
la coupe du bras élastique (160) par l'élément externe de coupe (210), suite à quoi l'élément élastique (80) ne repousse plus la couche de membrane (40) sur la saillie (70) de sorte que la couche de membrane (40) peut se détacher de la saillie (70) pour établir une liaison hydraulique entre la première découpe (50) et la deuxième découpe (60).
